# EUROPEAN PATENT SPECIFICATION

(11) **EP 1 988 121 B1**
(45) Date of publication and mention of the grant of the patent: **19.10.2011**
(21) Application number: 07738277.8
(22) Date of filing: 12.03.2007
(51) Int. Cl.: C08L 9/00, B60C 1/00, C08K 5/098, C08L 81/04

(54) **RUBBER COMPOSITION FOR COATING STEEL CORD AND TIRE MADE WITH THE SAME**
KAUTSCHUKZUSAMMENSETZUNG ZUR BESCHICHTUNG VON STAHLSEIL UND REIFEN DARAUS
COMPOSITION DE CAOUTCHOUC POUR LE REVETEMENT DE CABLE EN ACIER ET PNEU FAIT A PARTIR DE CELLE-CI

(30) Priority: 06.04.2006 JP 2006105235
(43) Date of publication of application: 05.11.2008
(73) Proprietor: Sumitomo Rubber Industries, Ltd., Kobe-shi, Hyogo 651-0072 (JP)
(72) Inventor: KUNISAWA, Tetsuya, Kobe-shi Hyogo 651-0072 (JP)
(74) Representative: Manitz, Gerhart
(86) International application number: PCT/JP2007/054805
(87) International publication number: WO 2007/113994

(56) References cited:
- JP-A- 2002 080 643
- JP-A- 2004 210 947
- JP-A- 2005 171 015
- US-A- 4 421 899

## Description

### TECHNICAL FIELD

The present invention relates to a rubber composition for coating a steel cord and a tire using the rubber composition.

### BACKGROUND ART

Conventionally, a tire cord has been provided in a tire for reinforcing the tire. For this tire cord, a steel cord or an organic fiber has been used, and the tire cord is placed mainly in a carcass layer or a belt layer of the tire. Particularly when the steel cord is used, it is necessary to enhance adhesion between the steel cord and a rubber, and for that purpose, the steel cord is generally coated with a rubber composition for coating the steel cord (coating rubber). It is required for the coating rubber composition to endow with not only durability (rubber strength) but also low fuel consumption (low rolling resistance) in consideration of environmental problems or economical efficiency.

In order to satisfy these requirements, silica may be blended in the steel cord coating rubber composition. However, in this case, though rolling resistance is lowered, there is a problem that rubber strength is lowered. Alternatively, an amount of a carbon black blended in the steel cord coating rubber composition may be lowered. However, also in this case, though rolling resistance is lowered, there is a problem that rubber strength is lowered.

On the other hand, JP 2005-75888 A discloses a steel cord coating rubber composition comprising a rubber component, a carbon black, an organic acid cobalt, a specific silane coupling agent and sulfur. However, since a specific silane coupling agent containing sulfur is used, there are problems of high cost and worse processability.

US 4,421,899 discloses a rubber compositions comprising 100 phr of diene rubber, 50 phr of carbon black, 4 phr of cobalt stearate and 9.4 or 5.9 phr, respectively, of an organic vulcanizing agent.

### DISCLOSURE OF INVENTION

Objects of the present invention are to provide a rubber composition for coating a steel cord that can improve both rubber strength and rolling resistance, and to provide a tire using the rubber composition.

The present invention relates to a rubber composition for coating a steel cord; comprising 30 to 100 parts by mass of a reinforcing agent, and 10 to 40 parts by mass of an organic vulcanizing agent on the basis of 100 parts by mass of a diene rubber having a content of natural rubber of 100 % by mass, and an organic acid cobalt, wherein the organic vulcanizing agent is represented by the following general formula:

-(R-Sₓ)ₙ-

wherein R is (CH₂-CH₂-O)ₘ-CH₂-CH₂, x is an integer of 3 to 6, n is an integer of 10 to 400, and m is an integer of 2 to 5.

The present invention also relates to a tire having a steel cord coated with the aforementioned rubber composition for coating a steel cord.

### BEST MODE FOR CARRYING OUT THE INVENTION

The rubber composition for coating a steel cord of the present invention comprises a diene rubber, a reinforcing agent, a specific organic vulcanizing agent, and an organic acid cobalt.

The diene rubber comprises 100% by mass of natural rubber (NR) for the reason that rolling resistance is lowered.

As for NR, NR conventionally used in rubber industries with a grade such as RSS#3 and TSR20 can be used.

Examples of the reinforcing agent are carbon black, silica, clay, alumina, talc, calcium carbonate, magnesium carbonate, aluminum hydroxide, magnesium hydroxide, magnesium oxide, and titanium oxide. These reinforcing agents may be used alone, or two or more kinds thereof may be used in combination. Among those, for the reason that reinforcing property and processability are excellent, carbon black and/or silica are preferable, and carbon black is more preferable.

An amount of the reinforcing agent is not less than 30 parts by mass, preferably not less than 35 parts by mass on the basis of 100 parts by mass of the diene rubber. When the amount of the reinforcing agent is less than 30 parts by mass, reinforcing property of the rubber becomes bad. The amount of the reinforcing agent is not more than 100 parts by mass, preferably not more than 95 parts by mass. When the amount of the reinforcing agent is more than 100 parts by mass, a viscosity in unvulcanized stage becomes high to make processability bad, and further, fuel efficiency becomes bad.

As for the organic vulcanizing agent, in order to improve both rubber strength and rolling resistance, instead of sulfur, a polymer containing sulfur atoms in a molecule, that is the organic vulcanizing agent having a structure represented by the following general formula:

-(R-Sx)ₙ-

wherein R is (CH₂-CH₂-O)ₘ-CH₂-CH₂, x is an integer of 3 to 6, n is an integer of 10 to 400, and m is an integer of 2 to 5 is used.

In the formula, x is not less than 3, preferably not less than 4. When x is less than 3, vulcanization is delayed. x is not more than 6, preferably not more than 5. When x is more than 6, preparation of the rubber composition becomes difficult.

In the formula, n is not less than 10, preferably not less than 50. When n is less than 10, the organic vulcanizing agent is easily volatilized, and has difficulty in handling. Further, n is not more than 400, preferably not more than 300. When n is more than 400, compatibility with the rubber becomes bad.

In the formula, m is not less than 2. When m is less than 2, bending performance of the obtained rubber composition is lowered. m is not more than 5, preferably not more than 4. When m is more than 5, sufficient hardness of the rubber composition cannot be obtained.

The amount of the organic vulcanizing agent is not less than 10 parts by mass on the basis of 100 parts by mass of the diene rubber. When the amount of the organic vulcanizing agent is less than 5 parts by mass, sufficient reinforcing property of the rubber cannot be obtained. The amount of the organic vulcanizing agent is not more than 40 parts by mass, preferably not more than 35 parts by mass. When the amount of the organic vulcanizing agent is more than 40 parts by mass, hardness of the rubber is significantly increased, and the rubber becomes frangible.

The organic vulcanizing agent can be used with a vulcanizing agent such as sulfur.

Examples of the organic acid cobalt are cobalt stearate, cobalt naphthenate, cobalt neodecanoate, cobalt oleate, and cobalt maleate, and the lake. Among those, for the reasons of being solid at normal temperature, having excellent stability in air, and further, functioning as a processing aid (lowering viscosity), it is preferable to use cobalt stearate. When the organic acid cobalt is blended, since the organic acid cobalt functions to crosslink the steel cord and the rubber, adhesion between the steel cord and the rubber can be improved.

An amount of the organic acid cobalt is preferably not less than 0.03 part by mass, more preferably not less than 0.05 part by mass, converted to cobalt, on the basis of 100 parts by mass of the diene rubber. When the amount of the organic acid cobalt is less than 0.03 part by mass, there is a tendency that adhesion to the steel cord is lowered. The amount of the organic acid cobalt is preferably not more than 3 parts by mass, more preferably not more than 1.0 part by mass. When the amount of the organic acid cobalt is more than 3 parts by mass, there is a tendency that rubber strength becomes bad.

In the rubber composition for coating a steel cord of the present invention, both rubber strength and rolling resistance can be improved by compounding the diene rubber, the reinforcing agent, and the specific organic vulcanizing agent in the specified amounts, and the organic acid cobalt.

In addition to the aforementioned diene rubber, reinforcing agent, organic vulcanizing agent, and organic acid cobalt, additives conventionally used in rubber industries such as various oils, various antioxidants, stearic acid, zinc oxide, sulfur, and various vulcanization accelerators can be suitably added to the rubber composition for coating a steel cord of the present invention, as occasion demands.

A tire of the present invention can be prepared by a general process using the rubber composition for coating a steel cord of the present invention. Namely, using the rubber composition for coating a steel cord of the present invention to which the aforementioned additives are added as occasion demands in an unvulcanized state, an unvulcanized rubber sheet with a specific size is prepared, while suitably adjusting a line speed by using calender rolls in order that the rubber composition does not excessively generate heat. The unvulcanized rubber sheet is molded into a shape of a carcass or a belt coated with a steel cord, and molded with other tire parts on a tire molding machine according to a general method to form an unvulcanized tire. This unvulcanized tire is heated and pressurized in a vulcanizer to obtain the tire of the present invention.

### EXAMPLES

The present invention is specifically explained in detail based on Examples, but the present invention is not limited only thereto.

Various chemicals used in Examples and Comparative Examples are explained in the following.
Natural rubber (NR): TSR20
Carbon black: DIABLACK LH (N326, N₂SA: 84 m²/g) available from Mitsubishi Chemical Corporation
Zinc oxide: Zinc oxide No.1 available from Mitsui Mining & Smelting Co., Ltd.
Process oil: DIANA PROCESS PS32 available from Idemitsu Kosan Co., Ltd.
Antioxidant: Santoflex 13 (N-phenyl-N'-(1,3-dimethylbutyl)-p-phenylenediamine) available from Flexsys Co.
Stearic acid: Kiri available from NOF Corporation
Organic acid cobalt: COST-F (cobalt stearate, containing 10 % by mass of cobalt element) available from DAINIPPON INK AND CHEMICALS, INCORPORATED.
Sulfur: Crystex HSOT20 (insoluble sulfur containing 80 % by mass of sulfur and 20 % by mass of an oil content) available from Flexsys Co. Organic vulcanizing agent: poly-3,6-dioxaoctane-tetrasulfide (x = 4, n = 200, m = 2)
Vulcanization accelerator: Nocceler NS (N-tert-butyl-2-benzothiazolylsulfeneamide) available from Ouchi Shinko Chemical Industrial Co., Ltd.

### EXAMPLES 1 to 3 and COMPARATIVE EXAMPLES 1 to 3

According to compounding contents shown in Table 1, in a Bumbury's mixer of 1.7 L manufactured by Kobe Steel., Ltd., chemicals other than sulfur and the vulcanization accelerator were kneaded under 140°C for not less than 5 minutes to obtain a kneaded product. Then, the sulfur and the vulcanization accelerator were added to the obtained kneaded product, and the kneaded product was kneaded with open rolls under a condition of not more than 100°C for 3 minutes to prepare an unvulcanized rubber sheet. The unvulcanized rubber sheet was press-vulcanized under a condition of 175°C for 10 minutes to prepare vulcanized rubber compositions of Examples 1 to 3 and Comparative Examples 1 to 3.

### (Tensile test)

Using a No.3 dumbbell, a vulcanized rubber test piece was prepared from the aforementioned vulcanized rubber composition, and according to JIS K 6251 "Rubber, vulcanized or thermoplasticDetermination of tensile stress-strain properties", the tensile test was carried out. Strength at break (TB) and elongation at break (EB) were measured to calculate a product (TB x EB). The larger TB (MPa) x EB (%) is, the more excellent rubber strength is.

### (Viscoelasticity test)

The aforementioned vulcanized rubber composition of the present invention was molded into a vulcanized rubber test piece with a specific size, using a viscoelasticity spectrometer VES-F-3 manufactured by Iwamoto Seisakusyo K.K., loss tangents (tan δ) of vulcanized rubber test pieces of Examples 1 to 3 and Comparative Examples 1 to 3 were measured at 60°C under conditions of an initial strain of 10 %, a dynamic strain of 2 %, and a frequency of 10 Hz. The smaller tan δ is, the smaller rolling resistance is and gives an excellent rolling resistance.

Evaluation results of the aforementioned tests are shown in Table 1.

**TABLE 1**

| | Ex. | | | Com. Ex. | | |
|---|---|---|---|---|---|---|
| | 1* | 2 | 3 | 1 | 2 | 3 |
| Amounts (part by mass) | | | | | | |
| NR | 100 | 100 | 100 | 100 | 100 | 100 |
| Carbon black | 65 | 65 | 65 | 65 | 65 | 65 |
| Zinc oxide | 10 | 10 | 10 | 10 | 10 | 10 |
| Process oil | 5 | 5 | 5 | 5 | 5 | 5 |
| Antioxidant | 2 | 2 | 2 | 2 | 2 | 2 |
| Stearic acid | 0.5 | 0.5 | 0.5 | 0.5 | 0.5 | 0.5 |
| Organic acid cobalt | 1 | 1 | 1 | 1 | 1 | - |
| Organic vulcanizing agent | 5 | 20 | 40 | - | 45 | 20 |
| Sulfur | 3 | - | - | 5 | - | - |
| Vulcanization accelerator | 1 | 1 | 1 | 1 | 1 | 1 |

| Evaluation results | | | | | | |
|---|---|---|---|---|---|---|
| TB × EB | 11000 | 11500 | 11000 | 10050 | 9850 | 9850 |
| tan δ | 0.155 | 0.150 | 0.140 | 0.160 | 0.135 | 0.150 |

| | | | | | | |
|---|---|---|---|---|---|---|
| * not according to the invention | | | | | | |

Comparative Example 1 is a conventional rubber composition for coating a steel cord without any organic vulcanizing agents.

In Examples 1 to 3, both rubber strength and rolling resistance were improved by compounding the rubber component, the reinforcing agent, and the organic vulcanizing agent in the specified amounts, and the organic acid cobalt.

In Comparative Example 2, since an amount of the organic vulcanizing agent was large, rubber strength was lowered.

In Comparative Example 3, since the organic acid cobalt was not contained, rubber strength was lowered.

### INDUSTRIAL APPLICABILITY

In the present invention, when the rubber composition comprising the diene rubber, the reinforcing agent, and the specific organic vulcanizing agent in the specified amounts, and the organic acid cobalt is used for a steel cord, both rubber strength and rolling resistance of a tire can be improved.

## Claims

1. A rubber composition for coating a steel cord, comprising: 30 to 100 parts by mass of a reinforcing agent; and
10 to 40 parts by mass of an organic vulcanizing agent on the basis of 100 parts by mass of a diene rubber having a content of natural rubber of 100 % by mass; and
an organic acid cobalt,
wherein said organic vulcanizing agent is represented by the following general formula:
-(R-Sₓ)ₙ-
wherein R is (CH₂-CH₂-O)ₘ-CH₂-CH₂, x is an integer of 3 to 6, n is an integer of 10 to 400, and m is an integer of 2 to 5.

2. A tire, which has a steel cord coated with the rubber composition for coating a steel cord of Claim 1.

## Patentansprüche

1. Kautschukzusammensetzung zum Beschichten eines Stahlcordes enthaltend 30 bis 100 Massenteile eines Verstärkungsmittels und 10 bis 40 Massenteile eines organischen Vulkanisationsmittels bezogen auf 100 Massenteile eines Dienekautschuks mit einem Gehalt an Naturkautschuk von 100 Massen-% sowie
eine organische Kobaltsäure,
wobei das organische Vulkanisationsmittel durch die nachfolgende allgemeine Formel wiedergegeben wird:
-(R-Sx)ₙ-
worin R (CH₂-CH₂-O)ₘ-CH₂-CH₂ ist, x eine ganze Zahl zwischen 3 und 6 ist, n eine ganze Zahl zwischen 10 und 400 ist und m eine ganze Zahl zwischen 2 und 5 ist.

2. Reifen, welcher einen Stahlcord aufweist, welcher mit einer Kautschukzusammensetzung zum Beschichten eines Stahlcords nach Anspruch 1 beschichtet ist.

## Revendications

1. Composition de caoutchouc pour le revêtement d'un câble en acier, comprenant : de 30 à 100 parties en masse d'un agent de renforcement ; et
de 10 à 40 parties en masse d'un agent de vulcanisation organique sur la base de 100 parties en masse d'un caoutchouc de diène présentant une teneur en caoutchouc naturel de 100 % en masse ; et
un composé de cobalt et d'acide organique,
dans laquelle ledit agent de vulcanisation est représenté par la formule générale suivante :
-(R-Sₓ)ₙ-
dans laquelle R est (CH₂-CH₂-O)ₘ-CH₂-CH₂, x est un nombre entier de 3 à 6, n est un nombre entier de 10 à 400, et m est un nombre entier de 2 à 5.

2. Pneu, lequel présente un câble en acier revêtu de la composition de caoutchouc pour le revêtement d'un câble en acier selon la revendication 1.
